(19) Europäisches Patentamt
European Patent Office
Office européen des brevets

(11) Veröffentlichungsnummer : **0 441 198 B1**

# (12) EUROPÄISCHE PATENTSCHRIFT

(45) Veröffentlichungstag der Patentschrift : **29.12.93 Patentblatt 93/52**

(51) Int. Cl.$^5$ : **B01D 17/05**

(21) Anmeldenummer : **91100946.2**

(22) Anmeldetag : **25.01.91**

## (54) Verwendung von Trialkanolaminpolyethern als Demulgatoren von Öl-in-Wasser-Emulsionen.

Die Akte enthält technische Angaben, die nach dem Eingang der Anmeldung eingereicht wurden und die nicht in dieser Patentschrift enthalten sind.

(30) Priorität : **03.02.90 DE 4003243**

(43) Veröffentlichungstag der Anmeldung : **14.08.91 Patentblatt 91/33**

(45) Bekanntmachung des Hinweises auf die Patenterteilung : **29.12.93 Patentblatt 93/52**

(84) Benannte Vertragsstaaten : **BE DE DK FR GB IT NL**

(56) Entgegenhaltungen :
**EP-A- 0 392 697**
**FR-A- 2 405 987**
**US-A- 2 407 895**
**US-A- 4 505 839**
**DATABASE CHEMICAL ABSTRACTS, (HOST:STN), Band 106, Nr. 24, 1984, Zusammenfassung Nr. 198881m, Columbus, Ohio, US; P. KOZAK et al.: "Preparation of lubricants based on triethanolamine. I. Condensation of triethanolamine by using acid catalysts"**

(73) Patentinhaber : **BASF Aktiengesellschaft**
**Carl-Bosch-Strasse 38**
**D-67063 Ludwigshafen (DE)**

(72) Erfinder : **Fikentscher, Rolf, Dr.**
**Von-Stephan-Strasse 27**
**W-6700 Ludwigshafen (DE)**
Erfinder : **Oppenlaender, Knut, Dr.**
**Otto-Dill-Strasse 23**
**W-6700 Ludwigshafen (DE)**
Erfinder : **Dix, Johannes Peter, Dr.**
**Am Haengel 5**
**W-6719 Weisenheim (DE)**
Erfinder : **Sager, Wilfried, Dr.**
**Ludwigshafener Strasse 11**
**W-6704 Mutterstadt (DE)**
Erfinder : **Vogel, Hans-Henning, Dr.**
**Damaschkeweg 1**
**W-6710 Frankenthal (DE)**
Erfinder : **Barthold, Klaus, Dr.**
**Paulusbergstrasse 4**
**W-6800 Mannheim 51 (DE)**
Erfinder : **Elfers, Guenther**
**Am Hang 18**
**W-6943 Birkenau (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft die Verwendung von Trialkanolaminpolyethern als Demulgatoren von Öl-in-Wasser-Emulsionen.

Bei der Förderung und Weiterverarbeitung von Rohöl fallen in großen Mengen Öl-in-Wasser-Emulsionen an, wobei die kontinuierliche äußere Phase von den Mengenverhältnissen Wasser zu Öl, dem natürlichen, im Öl enthaltenen Emulgatorsystem und der Entstehungsgeschichte der Emulsion abhängt. Bei der Förderung fällt der größte Teil des Rohöls als Wasser-in-Öl-Emulsion an und muß durch Zugabe chemischer Demulgatoren gespalten werden. Das abgetrennte Salzwasser enthält noch gewisse Mengen Restöl, wobei sich bevorzugt Öl-in-Wasser-Emulsionen bilden.

In noch stärkerem Maße treten Öl-in-Wasser-Emulsionen während der Weiterverarbeitung des Rohöls auf den Feldern und in den Raffinerien auf. Die Menge an emulgiertem Rohöl in den Öl-in-Wasser-Emulsionen kann bis zu 5% betragen. Zur Abtrennung dieses Restölgehaltes werden spezielle Demulgatoren, sogenannte Deoiler, verwendet, wobei es sich meist um kationische Polymere handelt, wie sie z.B. in DE-34 04 538 beschrieben werden. Typische Produkte werden ebenfalls in den US-Patentschriften 3 528 928, 4 333 947 und 3 893 615 beschrieben.

Die Abtrennung von Restölmengen ist für die Ölfeldwasserklärung und -aufbereitung aus ökologischen und technischen Gründen notwendig, da beispielsweise bei der Verwendung des Wassers zur Sekundarförderung durch Wasserfluten Restölmengen im Wasser den Einpreßdruck erhöhen würden.

Aus der US-Patentschrift 2 407 895 ist ein Verfahren zur Spaltung von Öl-in-Wasser-Emulsionen mit vergleichsweise niedermolekularen Kondensaten aus Alkanolaminen, hergestellt durch Kondensation in Gegenwart basischer Katalysatoren bekannt.

In den US-Patentschriften 4 179 396 und 4 383 933 werden weiter Deoiler aus Aluminiumsalzen oder Titantetrachlorid und Alkanolamin-Kondensaten beschrieben, die gegebenenfalls teilweise acyliert oder quaterniert worden sind.

Aus den US-Patentschriften 4 505 839 und 4 731 481 sind außerdem quaternierte und niedermolekulare Alkanolamin-Polykondensate als Deoiler bekannt, die durch katalytische Umsetzung mit $ZnCl_2$/Essigsäure oder $Al_2(SO_4)_3$/Essigsäure erhalten worden sind.

Weiter werden in den US-Patentschriften 4 404 362 und 4 459 220 Block-Polykondensate, die durch Kondensation von getrennt durch katalytische Umsetzung mit Lewis- oder Mineralsäuren (z.B. Phosphorsäure) hergestellten Triethanolamin-Polykondensaten und Triisopropanolamin-Polykondensaten erhalten werden, beschrieben.

Die bekannten Demulgatoren sind jedoch nicht befriedigend.

Es wurde nun gefunden, daß Trialkanolaminpolyether, erhältlich durch Kondensation von einem oder mehreren Trialkanolaminen in Gegenwart von phosphoriger Säure und/oder unterphosphoriger Säure hochwirksame Demulgatoren für Öl-in-Wasser-Emulsionen sind, die an universeller Anwendbarkeit und Spaltgeschwindigkeit den bekannten Deoilern überlegen sind und die weitgehend unempfindlich gegen Überdosierung sind. Sie enthalten keine Metallsalze, insbesondere Chloride, die korrosionsfördernd wirken können. Im Gegensatz zu Deoilern, die durch Kondensation in Gegenwart von Carbonsäuren erhalten worden sind, enthalten die erfindungsgemäßen Demulgatoren keine für die Wirksamkeit nachteiligen Carbonsäureester-Gruppen.

Bevorzugt und besonders wirksam sind Trialkanolaminpolyether, erhältlich durch Kondensation in Gegenwart von phosphoriger Säure und/oder unterphosphoriger Säure von einem oder mehreren Trialkanolaminen der allgemeinen Formel

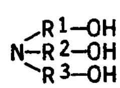 I,

in der die Reste $R^1$ bis $R^3$ für gleiche oder unterschiedliche 1,2-Alkylengruppen mit 2 bis 4 C-Atomen stehen.

Die Herstellung der Trialkanolaminpolyether erfolgt, indem man die Trialkanolamine, vorzugsweise Triethanolamin oder Triisopropanolamin $N[CH_2\text{-}CH(CH_3)\text{-}OH]_3$, oder Gemische von mehreren Trialkanolaminen, in Gegenwart von phosphoriger Säure ($H_3PO_3$) und/oder unterphosphoriger Säure ($H_3PO_2$) kondensiert. Die phosphorige und/oder unterphosphorige Säure wird, gerechnet als 100 %ige Säure, zweckmäßig in einer Menge von 0,05 bis 2 Gew.%, vorzugsweise 0,1 bis 1,0 Gew.%, bezogen auf das zu kondensierende Trialkanolamin, eingesetzt. Im allgemeinen werden Kondensationstemperaturen von 120 bis 280°C, vorzugsweise 150 bis 260°C, insbesondere 180 bis 240°C angewandt. Die Reaktionsdauer beträgt im allgemeinen 1 bis 10 Stunden, vorzugsweise 4 bis 8 Stunden. Zweckmäßig wird die Kondensation durch Variation der Temperatur und/oder Reaktionsdauer in der Weise durchgeführt, daß die Viskosität beim Einsatz von Triethanolamin für den

erhaltenen Triethanolaminpolyether im Bereich von 10 000 bis 100 000 mPa.s, vorzugsweise 20 000 bis 50 000 mPa.s liegt, für Triisopropanolaminpolyether im Bereich von 100.000 bis 1.000.000 mPa.s, vorzugsweise 200.000 bis 600.000 mPa.s, liegt und für ein Mischkondensat aus bevorzugt äquimolaren Mengen Triethanolamin und Triisopropanolamin im Bereich von 80.000 bis 400.000 mPa.s, vorzugsweise 100.000 bis 300.000 mPa.s, liegt (jeweils gemessen in unverdünntem Zustand bei 20°C).

Die erfindungsgemäßen Trialkanolaminpolyether werden den Öl-in-Wasser-Emulsionen zum Brechen der Emulsion zweckmäßig in Mengen von 1 bis 100 Gew.-ppm, vorzugsweise 1 bis 30 Gew.-ppm, insbesondere 2 bis 10 Gew.-ppm, zugesetzt.

Synthesebeispiel

1788 g Triethanolamin und 12 g unterphosphorige Säure (50 %ige wäßrige Lösung) wurden unter Rühren und Durchleiten eines schwachen Stickstoffstroms auf 225 bis 230°C erwärmt. Das bei der Reaktion gebildete Wasser wurde abdestilliert. Nach 7 bis 8 Stunden wurde die Kondensation bei einer Viskosität von 21.000 mPa.s durch Kühlung auf Raumtemperatur abgebrochen. Es wurden 1492 g Triethanolaminpolyether erhalten (Aminzahl: 7,69 mmol/g).

Anwendungsbeispiel

100 ml der zu testenden Öl-in-Wasser-Emulsion wurde in 177,44 ml große graduierte, klar durchsichtige Testflaschen mit rechteckigem Querschnitt gefüllt. Zu den Öl-in-Wasser-Emulsionen in den Testflaschen wurden unterschiedliche Mengen des Demulgators zugegeben, um den Meßbereich von 1 bis 10 Gew.-ppm Demulgator in der Emulsion abzudecken. Die die zu testenden Proben enthaltenden Testflaschen wurden 50mal geschüttelt und dann auf Wasserklarheit entsprechend den nachstehend angegebenen Beurteilungskriterien beurteilt. Dieses Testverfahren wurde zweimal wiederholt. Die Proben wurden dann 100mal geschüttelt und danach beurteilt und nochmals 150mal geschüttelt, wonach eine letzte Beurteilung erfolgte. Wenn große Mengen Öl vorhanden waren und dieses an der Wand haftete, so daß eine Beurteilung der Proben schwierig war, wurden die Proben nach dem zweiten Schütteln dekantiert und in eine neue Testflasche umgefüllt.

Beurteilungskriterien:

10 Unbehandelt: keine Änderung im Aussehen der Emulsion
9 geringfügige Farbveränderung der Emulsion
8 Emulsion zeigt deutliche Farbänderung
7 Wasser schwach gelb
6 weißes Wasser - man kann Zahlen oder Buchstaben am Boden der Flasche sehen
5 weißes Wasser - man kann Zahlen oder Buchstaben an der Längsseite der Flasche sehen beim Blick durch die Flasche parallel zur schmalen Seite
4 weißes Wasser - man kann Zahlen an der Längsseite der Flasche lesen beim Blick durch die Flasche parallel zur schmalen Seite
3 weißes Wasser - man kann Zahlen an der schmalen Seite der Flasche sehen beim Blick durch die Flasche parallel zur Längsseite der Flasche
2 weißes Wasser - man kann Zahlen an der schmalen Seite der Flasche lesen beim Blick durch die Flasche parallel zur Längsseite der Flasche
1 sehr sauberes Wasser - man kann Zahlen an der schmalen Seite der Flasche beim Blick durch die Flasche parallel zur Längsseite der Flasche sehr gut lesen.

Die geprüfte Testemulsion war eine Öl-in-Wasser-Emulsion aus einer Erdölaufbereitungsanlage mit einem Ölgehalt von 430 Gew.-ppm, die bei Umgebungstemperatur mit dem Demulgator behandelt wurde.

| Demulgator | Einsatzmengen Gew.-ppm | Beurteilung nach Schütteln der Proben 50mal | 50mal | 50mal | 100mal | 150mal |
|---|---|---|---|---|---|---|
| Triethanolamin-polyether gemäß Synthesebeispiel der vorliegenden Erfindung | 6 | 8 | 5 | 2 | 1 | 1 |

Die erfindungsgemäße Verwendung des Triethanolaminpolyethers als Deoiler ergab gute Ergebnisse über einen weiten Konzentrationsbereich. Der Deoiler war weitgehend unempfindlich gegenüber Überdosierung. Er zeigte weiterhin keine nachteilige Wechselwirkung gegenüber anderen Demulgatoren, z.B. solchen zum Brechen von Wasser-in-Öl-Emulsionen.

**Patentansprüche**

1. Verwendung von Trialkanolaminpolyethern, erhältlich durch Kondensation von einem oder mehreren Trialkanolaminen in Gegenwart von phosphoriger Säure und/oder unterphosphoriger Säure, als Demulgatoren von Öl-in-Wasser-Emulsionen.

2. Verwendung von Trialkanolaminpolyethern gemäß Anspruch 1, erhältlich durch Kondensation von einem oder mehreren Trialkanolaminen der allgemeinen Formel I

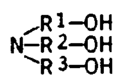 I,

in der die Reste $R^1$ bis $R^3$ für gleiche oder unterschiedliche 1,2-Alkylengruppen mit 2 bis 4 C-Atomen stehen, in Gegenwart von phosphoriger Säure und/oder unterphosphoriger Säure.

**Claims**

1. The use as demulsifiers of oil-in-water emulsions of trialkanolamine polyethers obtainable by condensation of one or more trialkanolamines in the presence of phosphorous acid and/or hypophosphorous acid.

2. The use as claimed in claim 1 of trialkanolamine polyethers obtainable by condensation in the presence of phosphorous acid and/or hypophosphorous acid of one or more trialkanolamines of the general formula I

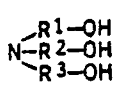 I,

where the radicals $R^1$ to $R^3$ are identical or different 1,2-alkylene groups of from 2 to 4 carbon atoms.

**Revendications**

1. Utilisation de polyéthers de trialcanolamines, que l'on peut obtenir par la condensation d'une ou plusieurs trialcanolamines en présence d'acide phosphoreux et/ou d'acide hypophosphoreux, à titre de désémulsifs d'émulsions huile-dans-eau.

2. Utilisation de polyéthers de trialcanolamines suivant la revendication 1, que l'on peut obtenir par la condensation d'une ou plusieurs trialcanolamines de la formule générale I

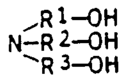 I,

dans laquelle les symboles $R^1$ à $R^3$ représentent des radicaux 1,2-alkylène, identiques ou différents, comportant de 2 à 4 atomes de carbone, en présence d'acide phosphoreux et/ou d'acide hypophosphoreux.